(19) Europäisches Patentamt
European Patent Office
Office européen des brevets

(11) Veröffentlichungsnummer: **0 025 544**
**B1**

# (12) EUROPÄISCHE PATENTSCHRIFT

(45) Veröffentlichungstag der Patentschrift: **27.07.83**

(51) Int. Cl.³: **C 08 L 27/06** // (C08L27/06, 23/28, C08K5/09, 5/15, 5/52)

(21) Anmeldenummer: **80105208.5**

(22) Anmeldetag: **02.09.80**

(54) **Thermoplastische Masse.**

(30) Priorität: **14.09.79 DE 2937178**

(43) Veröffentlichungstag der Anmeldung: **25.03.81 Patentblatt 81/12**

(45) Bekanntmachung des Hinweises auf die Patenterteilung: **27.07.83 Patentblatt 83/30**

(84) Benannte Vertragsstaaten: **AT BE CH DE FR GB IT LI NL SE**

(56) Entgegenhaltungen:
**AT-B-218 242**
**AT-B-221 275**
**AT-B-239 529**
**AT-B-239 533**
**AT-B-329 269**
**AT-B-329 270**
**AT-B-332 645**
**AT-B-342 301**

(73) Patentinhaber: **HOECHST AKTIENGESELLSCHAFT, Postfach 80 03 20, D-6230 Frankfurt/Main 80 (DE)**

(72) Erfinder: **Klug, Helmut, Dr., Münchstrasse 9, D-8901 Aystetten (DE)**
Erfinder: **Frey, Hans-Helmut, Dr., Schillerstrasse 1, D-6232 Bad Soden am Taunus (DE)**

EP 0 025 544 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Thermoplastische Masse

Die vorliegende Erfindung betrifft transparente, leicht verarbeitbare thermoplastische Massen auf Basis von Vinylchlorid-Polymerisaten, die gleichzeitig eine gute Zähigkeit und gute Licht- und Wetterbeständigkeit besitzen.

Es ist bekannt, Polyvinylchlorid und Vinylchlorid-Mischpolymerisate durch einen Zusatz von Chlorierungsprodukten von Polyolefinen, welche durch Chlorieren von Polyolefinen in wäßriger Suspension oder in Salzsäure, ggf. in Anwesenheit von Kieselsäure und Siliconöl erhalten wurden und die einen Chlorgehalt von 25 bis 50 Gew.-% besitzen, zu elastifizieren. Chlorierungsprodukte mit besonders guter elastifizierender Wirkung erhält man dabei durch Chlorierung eines Niederdruckpolyäthylens einer Dichte zwischen 0,940 und 0,955 g/cm$^3$ bei Temperaturen, die zumindest während der letzten Stufe der Chlorierung über 120° C liegen. Dabei tritt eine gute Durchchlorierung des Polyolefins ein, die für die elastifizierende Wirkung wesentlich ist. Zur Bestimmung des Maßes der Durchchlorierung können vor allem die folgenden Meßmethoden dienen:

1. Die Bestimmung des Rückstandswertes nach der Toluol-Aceton-Methode (TAc). Hierbei werden 4 g des zu prüfenden Chlorpolyäthylens in 100 ml eines Gemisches von Toluol und Aceton (1 : 1) eine Stunde unter Rückfluß erhitzt. Die Menge des unlöslichen Rückstandes, der aus nicht ausreichend chlorierten Anteilen besteht, ist ein Maß für die Durchchlorierung des Polyäthylenkorns. Je geringer der Rückstand, desto geeigneter ist das Chlorierungsprodukt für die Elastifizierung von Polyvinylchlorid.
2. Die Bestimmung des Quellwertes in Methylcyclohexan (MCH). Die Gewichtszunahme einer Probe nach 24stündiger Lagerung in Methylcyclohexan ist ebenfalls ein Maß für die Durchchlorierung des Polyäthylenkorns. Nicht ausreichend chlorierte Anteile quellen kaum. Produkte mit hohem Quellenwert sind für die Elastifizierung des PVC besonders geeignet.

Chlorierte Niederdruck-Polyäthylene mit Chlorgehalten von etwa 39 Gew.-%, die unter den oben angegebenen Bedingungen hergestellt werden, haben TAc-Werte unter 40 Gew.-% und MCH-Werte über 10 Gew.-%. Mischungen von PVC mit solchen Chlorpolyäthylenen haben eine ausgezeichnete Schlagzähigkeit, aber eine schlechte Transparenz. So liegt die Transparenz einer Mischung aus 80 Gew.-% S-PVC vom K-Wert 70 und 20 Gew.-% eines chlorierten Polyäthylens mit den angegebenen Eigenschaften bei etwa 70%, während die des reinen Suspensions-PVC (S-PVC) bei etwa 88—90% liegt.

Ferner ist aus der DE-PS 24 56 278 bekannt, daß thermoplastische Massen, bestehend aus

a) 95—70 Gew.-% Vinylchlorid-Polymerisat und
b) 5—30 Gew.-% eines chlorierten Polyäthylens,

in denen das chlorierte Niederdruckpolyäthylen einen Chlorgehalt von 38 bis 42 Gew.-%, einen Rückstandswert von 55—70 Gew.-% und einen Quellenwert unter 1 Gew.-% aufweist und aus einem Niederdruckpolyäthylen einer Dichte zwischen 0,955 und 0,965 g/cm$^3$, eines Schmelzindex MFI 190/5 (DIN 53 735) von 20 bis 65 g/10 min durch Chlorieren in Wasser oder Salzsäure, ggf. in Gegenwart von 0 bis 2 Gew.-% Kieselsäure und 0 bis 1 Gew.-% Siliconöl, jeweils bezogen auf eingesetztes Niederdruckpolyäthylen, bei Temperaturen zwischen 50 und 120°C hergestellt wurde, wobei mindestens die letzten 10% Chlor zwischen 110 und 120° C eingeführt wurden, eine gute Transparenz und eine für die Anwendung als Lichtwände, Wellplatten und Profile ausreichende Schlagzähigkeit und Bewitterungsbeständigkeit haben. Eine gute Zähigkeit erreicht man dabei vor allem bei Einsatz von relativ hochmolekularem Vinylchlorid-Polymerisaten, z. B. einem S-PVC mit einem K-Wert von 70. Ein so hochmolekulares PVC läßt sich aber nur schwierig verarbeiten, da infolge der hohen Schmelzviskosität mit höheren Temperaturen gearbeitet werden muß, was bei der Extrusion leicht zu Brennern oder unruhiger Oberfläche des Extrudates führt. Bei Verwendung von PVC mit niedrigerem K-Wert verbessert sich zwar die Verarbeitbarkeit, gleichzeitig sinkt aber die Zähigkeit ab.

Die Aufgabe vorliegender Erfindung bestand daher in der Bereitstellung von thermoplastischen Massen auf Basis von Vinylchlorid-Polymerisaten, die die gute Transparenz, Zähigkeit und Bewitterungsbeständigkeit der Massen gemäß DE-PS 24 56 278 und zusätzlich eine verbesserte Fließfähigkeit und Verarbeitbarkeit haben.

Erfindungsgemäß wird diese Aufgabe durch Zugabe zweier verschiedener Chlorpolyäthylene zu Vinylchlorid-Polymerisaten gelöst.

Gegenstand der Erfindung ist daher eine transparente, leicht verarbeitbare thermoplastische Masse mit guter Zähigkeit und Bewitterungsbeständigkeit, bestehend im wesentlichen aus

A) 95—80, vorzugsweise 92—86 Gew.-% Vinylchlorid-Polymerisat und
B) 5—20, vorzugsweise 8—14 Gew.-% chlorierter Polyäthylene, jeweils bezogen auf die thermoplastische Masse,

die dadurch gekennzeichnet ist, daß die Komponente

A) ein Vinylchlorid-Polymerisat mit einem K-Wert von 55—65, vorzugsweise 58—63 darstellt und die Komponente

B) eine Mischung ist aus

$B_1$) 2,5—15, vorzugsweise 4—10 Gew.-T. eines chlorierten Niederdruckpolyäthylens, das einen Chlorgehalt von 37—42, vorzugsweise 38—40 Gew.-%, einen Rückstandswert von 0—30, vorzugsweise 0—25% (gemessen durch Extrahieren mit Toluol-Aceton 1 : 1) und einen Quellwert von 10—70, vorzugsweise 20—50% (gemessen in Methylcyclohexan) hat, und durch Chlorieren eines Niederdruckpolyäthylens einer Dichte von 0,940—0,955 g/cm³ und eines Schmelzindex MFI 190/5 von 0,1—5, vorzugsweise 0,3—3,5 g/10 min in Suspension in Wasser oder in 10—35%iger Salzsäure in Gegenwart von 0—2 Gew.-% Kieselsäure und 0—1 Gew.-% Siliconöl, jeweils bezogen auf eingesetztes Polyäthylen, bei Temperaturen zwischen 50 und 130°C hergestellt wurde, wobei mindestens 10% Chlor zwischen 120 und 130°C eingeführt wurden, und

$B_2$) 2,5—15, vorzugsweise 4—10 Gew.-T. eines chlorierten Niederdruckpolyäthylens, das einen Chlorgehalt von 37—42, vorzugsweise 39—41 Gew.-%, einen Rückstandwert von 50—70, vorzugsweise 50—60%, und einen Quellwert unter 1% aufweist, und aus einem Niederdruckpolyäthylen einer Dichte zwischen 0,955 und 0,965 g/cm³ und eines Schmelzindex MFI 190/5 von 20—65, vorzugsweise 40—55 g/10 min durch Chlorieren in Suspension in Wasser oder in 10—35%iger Salzsäure in Gegenwart von 0—2 Gew.-% Kieselsäure und 0—1 Gew.-% Siliconöl, jeweils bezogen auf das eingesetzte Polyäthylen, bei Temperaturen zwischen 50 und 120°C hergestellt wurde, wobei mindestens die letzten 10% Chlor zwischen 110 und 120°C eingeführt wurden.

Die erfindungsgemäße thermoplastische Masse also zu 95 bis 80 Gew.-%, vorzugsweise zu 92—86%, aus Polyvinylchlorid oder einem Copolymerisat des Vinylchlorids mit anderen Comonomeren. Als Comonomere kommen beispielsweise in Frage:

Olefine wie Äthylen oder Propylen, Vinylester von geradkettigen oder verzeigten Carbonsäuren mit 2 bis 20, vorzugsweise 2 bis 4 Kohlenstoffatomen, wie Vinylacetat, -propionat, -butyrat, -2-äthyl-hexoat, -stearat oder Vinylisotridecansäureester; Vinylhalogenide, wie Vinylfluorid, Vinylidenfluorid oder Vinylidenchlorid; Vinyläther wie Vinylmethyläther; Vinylpyridin; ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid, Maleinsäureimid sowie dessen N-Substitutionsprodukte mit arpmatischen, cycloaliphatischen sowie gegebenenfalls verzweigten, aliphatischen Substituenten; Acrylnitril, Styrol. Es können auch Gemische dieser Monomeren zum Einsatz kommen.

Die Menge an Comonomeren-Einheiten im VC-Copolymerisat kann bis zu 20 Gew.-% betragen, vorzugsweise liegt sie bei 1 bis 5 Gew.-%. Bevorzugt wird Suspensions- oder Masse-PVC eingesetzt.

Die restlichen 5 bis 20 Gew.-%, vorzugsweise 8 bis 14 Gew.-%, der thermoplastischen Masse bestehen aus den erfindungsgemäß zu verwendenden chlorierten Niederdruckpolyäthylenen, die feinteilig sind und sich gut homogen mit Vinylchlorid-Polymerisat-Pulvern mischen lassen.

Die Herstellung der erfindungsgemäß eingesetzten chlorierten Niederdruckpolyäthylene erfolgt durch Chlorierung von feinteiligem Niederdruckpolyäthylen — das ggf. bei einer Temperatur von 100°C bis zum Kristallit-Schmelzpunkt des jeweiligen Polyäthylens während einer Dauer von vorzugsweise 5 bis 300 Minuten getempert bzw. vorgesintert sein kann — in Wasser oder in 10 bis 35%iger, vorzugsweise in 15 bis 25%iger wäßriger Salzsäure, wobei das salzsaure Medium zweckmäßigerweise das 3- bis 30-fache der Menge des Niederdruckpolyäthylens beträgt.

Die Temperaturführung bei der Chlorierung ist zweckmäßigerweise so, daß die Chlorierung beispielsweise im Temperaturbereich von 50—100°C, vorzugsweise 70—90°C begonnen, dann unter kontinuierlicher Temperatursteigerung fortgeführt und bei Temperaturen im Bereich von 110 und 120°C bzw. 120—130°C beendet wird. Es ist aber auch möglich, die Chlorierung als Zweistufenreaktion durchzuführen, d. h. bei 50 bis 100°C, vorzugsweise 70—90°C zu beginnen, danach die Temperatur unter Stoppen der Chlorzufuhr auf 110—120°C für die Komponente $B_2$ bzw. 120—130°C für die Komponente $B_1$ zu erhöhen und dann die Chlorierung fortzuführen und zu beenden oder aber die gesamte Chlorierung zwischen 110 und 120°C (Komponente $B_2$) bzw. 120 und 130°C (Komponente $B_1$) durchzuführen.

Wesentlich ist dabei, wie oben erwähnt, immer nur, daß mindestens die letzten 10 Gew.-% Chlor zwischen 110 und 120°C bzw. 120—130°C eingeführt werden.

Unter Kieselsäure, die als Agglomerisationshemmer bei der Chlorierung anwesend sein kann, seien die verschiedenen wasserhaltigen oder wasserfreien Arten des feinporigen und vorzugsweise großoberflächigen Siliziumdioxids verstanden, deren innere Oberfläche zweckmäßigerweise im Bereich von 50 bis 400 cm²/g, vorzugsweise 150 bis 300 cm²/g (nach BET) liegen sollte. Die mittlere Teilchengröße der Kieselsäure beträgt im allgemeinen 1 und 50 µm.

Unter den, dem technischen Sprachgebrauch zufolge als Silikonöl bezeichneten Organo-Siliciumverbindungen werden Polysiloxane verstanden, die auf die wiederkehrende Einheit der allgemeinen Formel

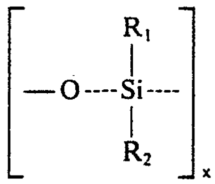

aufgebaut sind, worin $R_1$ und $R_2$ Alkylreste mit vorzugsweise 1 bis 12 C-Atomen, Arylreste mit vorzugsweise 6 oder 10 C-Atomen bzw. Aralkylreste mit 7 bis 12 C-Atomen und X eine Zahl von 10 bis 10 000, vorzugsweise 100 bis 1000 bedeuten. Verbindungen aus der Reihe der Dimethylpolysiloxane haben sich als besonders wirksam gezeigt. Weitere Beispiele sind: Diäthyl-, Dipropyl-, Methyl-, Äthyl-, Dioctyl-, Dihexyl-, Methylpropyl-, Dibutyl- und Didodecylpolysiloxane. Die Viskosität liegt zweckmäßigerweise zwischen 1000 und 500 000 Centistokes und insbesondere zwischen 1000 und 60 000 Centistokes.

Der Antiagglomerationseffekt der Salzsäure wird durch gleichzeitigen Zusatz von Kieselsäure und Silikonöl weiter verbessert. Ein solcher Zusatz wird deshalb bevorzugt. In der Regel genügen 0,1 bis 2 Gew.-%, vorzugsweise 0,1—1 Gew.-% Kieselsäure in Verbindung mit 0,001 bis 1,0, vorzugsweise 0,02 bis 0,7 Gew.-% Silikonöl, jeweils bezogen auf eingesetztes Niederdruckpolyäthylen. Die Menge der Kieselsäure und des Silikonöls ist nach oben nicht streng begrenzt und kann die vorstehend genannten Obergrenzen unter Umständen übersteigen. Dies verbessert die Agglomerisationshemmung, hat aber gewisse Nachteile für die Mischung mit PVC zur Folge.

Der Zusatz der Kieselsäurekomponente und des Polysiloxans, die ggf. vor dem Zusatz bereits miteinander gemischt werden können, erfolgt zweckmäßigerweise vor oder zu Beginn der Chlorierung. Nach einer anderen Ausführungsform kann man zunächst die Kieselsäure allein zusetzen und das Silikonöl im Verlauf der Chlorierung zugeben. Eine eventuell eingetretene leichte Agglomeration läßt sich durch den späteren Silikonzusatz mindestens teilweise wieder rückgängig machen, selbst wenn er erst vor der Trocknung vorgenommen wird. Es ist selbstverständlich auch möglich, die vorgesehene Menge Silikonöl in Portionen innerhalb einzelner oder aller Verfahrensstufen zuzusetzen.

Die erfindungsgemäße thermoplastische Masse kann zusätzlich noch bekannte Zusatzstoffe wie Wärme- bzw. Lichtstabilisatoren, UV-Absorber, Gleitmittel, Weichmacher, Farbstoffe, Pigmente sowie Antistatika enthalten.

Es wurde dabei gefunden, daß bei den erfindungsgemäßen Mischungen die Stabilisierung nicht nur einen Einfluß auf Wärme- und Lichtstabilität, sondern auch auf Transparenz und Verarbeitbarkeit hat. Mit den üblichen Zinnstabilisatoren, z. B. Mono- oder Dialkylzinnverbindungen mit 1 bis 10 C-Atomen im Alkylrest, bei denen die restlichen Wertigkeiten des Zinns durch Sauerstoff- und/oder Schwefelatome enthaltende Reste abgesättigt sind, wie Dibutyl-Zinn-bis-thioglykolsäureoctylester, erhält man zwar eine sehr gute Transparenz, die Lichtstabilität ist aber bei schwefelhaltigen Verbindungen für den Außeneinsatz nicht ausreichen. Die Lichtstabilität läßt sich auch nicht durch Zusatz eines UV-Absorbers oder Lichtstabilisators verbessern, während bei den schwefelfreien Verbindungen die rheologischen Eigenschaften negativ beeinflußt werden.

Übliche Ba/Cd-Stabilisatoren, wie komplexes Ba/Cd-Laurat, verringern die Transparenz.

Die besten Ergebnisse werden mit 2—8 Gew.-%, vorzugsweise 4—7 Gew.-%, bezogen auf die thermoplastische Masse, einer Stabilisatormischung bestehend aus

(a) 0,75—2 Gew.-T. eines komplexen Ba/Cd-Benzoats,
(b) 0—2 Gew.-T. einer komplexen Ba/Cd-Seife einer Fettsäure mit 12—18 C-Atomen,
(c) 0,3—1 Gew.-T. eines Phenylalkylphosphites mit 8—12 C-Atomen in der Alkylgruppe,
(d) 0,5—3 Gew.-T. eines epoxydierten Fettes, z. B. epoxydiertes Leinöl oder epoxydiertes Sojaöl,
(e) 0—1 Gew.-T. eines UV-Absorbers und
(f) 0,5—1,0 Gew.-T. Gleitmittel wie beispielsweise Paraffinöl erhalten.

Diese Stabilisierung wird deshalb bevorzugt. Unter komplexen Ba/Cd-Verbindungen sind handelsübliche Stabilisatoren zu verstehen, die außer den Ba/Cd-Salzen noch wechselnde Mengen Polyalkohole, wie z. B. Trimethylolpropan oder Pentaerithrit und Antioxydantien, z. B. Bisphenol A, enthalten. In den Komplexen sind die Ba/Cd-Verbindungen etwa zu 80% enthalten.

Beispiele für die Komponente (b) der vorstehenden Stabilisatormischung sind etwa die bekannten komplexen Ba/Cd-Laurate und- Stearate. Als Komponente (c) eignen sich sowohl die Diphenylalkylphosphite als auch die Phenyldialkylphosphite, wie beispielsweise Diphenyloctylphosphit oder Phenyldidecylphosphit. Als UV-Absorber und Gleitmittel für obige Stabilisatormischung kommen die nachfolgend aufgeführten, auch für andere Stabilisationssysteme einsetzbaren

Verbindungen in Frage.

Zur Verbesserung der Lichtbeständigkeit können den Mischungen ultraviolettes Licht absorbierende Substanzen, wie Benzophenon- oder Benztriazol-Derivate, beispielsweise 2-(2'Hydroxy-5'-methylphenyl)benztriazol oder 2-(Hydroxy-3'-tertiärbutyl-5'methylphenyl)-5-Chlor-benztriazol zugegeben werden.

Als Gleitmittel können beispielsweise ein oder mehrere höhere aliphatische Carbonsäuren und Oxycarbonsäuren, sowie deren Ester und Amide, wie Stearinsäure, Montansäure, Glycerinmonooleat, Bisstearyl- bzw. Bis-palmitoyläthylendiamin, Montansäureester von Äthandiol oder 1,3-Butandiol, Fettalkohole mit mehr als 10 Kohlenstoffatomen, sowie deren Äther, niedermolekulare Polyolefine, Paraffinöle oder Hartparaffine in Mengen von zweckmäßigerweise 0,1 bis 6 Gew.-%, bezogen auf die Gesamtmischung, zum Einsatz kommen.

Als Pigmente sind beispielsweise verwendbar: Titandioxid, Bariumsulfat, Ruß sowie weitere hitzebeständige anorganische und organische Farbpigmente.

Bezüglich des Zusatzes weiterer, hier nicht erwähnter Substanzen sei auf die Monographie von Helmut Kainer, »Polyvinylchlorid und Vinylchlorid-Mischpolymerisate«, Springer-Verlag, Berlin, Heidelberg, New York, 1965, Seiten 209 bis 258 und 275 bis 329 verwiesen.

Die erfindungsgemäße thermoplastische Masse eignet sich je nach Anteil der chlorierten Niederdruckpolyäthylene für Profile, Platten, Folien, Spritzgußteile und andere Formkörper. Durch ihr gleichmäßig feines Korn ist sie sehr gut nach der Dry-blend-Technik verarbeitbar. Ein Mischen der Bestandteile im plastifizierten Zustand ist nicht erforderlich. Die Mischung wird vorzugsweise dort eingesetzt, wo es auf gute Transparenz, Verarbeitbarkeit und Bewitterungsstabilität ankommt.

## Beispiel 1 und Vergleichsversuche A und B

In einem Chlorierungskessel wurden 10 kg Niederdruckpolyäthylen einer Dichte von 0,955 und eines Schmelzindex MFI 190/5 von 0,3 g/10 min in 90 Liter 20%iger Salzsäure zunächst bei 80°C auf einen Chlorgehalt von 28% chloriert. Danach wurde die Temperatur auf 121,5°C angehoben und bis zu einem Endchlorgehalt von 39,2% weiterchloriert. Nach Abkühlen und Entspannen wird abgesaugt, mehrmals gewaschen, filtriert und bei 75°C getrocknet. Es wurde ein feinpulvriges Chlorierungsprodukt mit einem TAC-Wert von 13 Gew.-% und einem MCH-Wert von 14 Gew.-% gewonnen, das als Chlorpolyäthylen $B_1$ eingesetzt wurde.

In einem zweiten Chlorierungskessel wurden 10 kg Niederdruckpolyäthylen einer Dichte von 0,96 und eines Schmelzindex MFI 190/5 von 46 g/10 min in 90 Liter 20%iger Salzsäure, in Gegenwart von 0,3 Gew.-% Kieselsäure mit mittlerer Teilchengröße von 12 µm und einer inneren Oberfläche nach BET von 200 $cm^2/g$ und 0,03 Gew.-% Dimethylpolysiloxan mit einer Viskosität von 1000 Centistokes, jeweils bezogen auf die Polyäthylenmenge, beginnend bei 70°C und während der weiteren Aufheizung auf 90°C bis zu einem Chlorgehalt von 30 Gew.-% chloriert. Anschließend wurde auf 115°C aufgeheizt und bis zu einem Endchlorgehalt von 40,2 Gew.-% weiterchloriert. Nach Aufarbeitung wie oben wurde ein feinpulvriges Chlorierungsprodukt mit einem TAC-Wert von 62 Gew.-% und einem MCH-Wert von 0,6 Gew.-% erhalten, das als Chlorpolyäthylen $B_2$ eingesetzt wurde.

Für das erfindungsgemäße Beispiel 1 wurden 90 Gew.-T Suspensions-PVC mit einem K-Wert von 60 mit 5 Gew.-T Chlorpolyäthylen $B_1$ und 5 Gew.-T. Chlorpolyäthylen $B_2$ mit jeder der unten beschriebenen Stabilisierungen auf der Walze bei 175°C in 10' zu einem Walzfell verarbeitet. Aus dem Walzfell wurden bei 180°C Preßplatten von 1 und 4 mm Dicke hergestellt; Preßdauer: 5'. Für die Bestimmung der Transparenz und Streuung dienten die 1 mm Platten; hierzu wird der prozentuale Anteil des durchgehenden Lichtes und der Streuung einer Tageslichtlampe gemessen. Die Kerbschlagzähigkeit $a_k$ bei 23°C wurde an Prüfkörpern aus den 4 mm Platten nach DIN 53 453 bestimmt.

Für die Vergleichsversuche wurden 90 Gew.-T. des gleichen PVC mit jeweils 10 Gew.-T. des Chlorpolyäthylens $B_1$ (Versuch A) oder $B_2$ (Versuch B) unter den gleichen Bedingungen wie in Beispiel 1 vermischt und zu Preßplatten verarbeitet. Alle drei Polymermischungen wurden mit jeweils drei verschiedenen, nachfolgend angegebenen Stabilisierungen versetzt:

1. Zinn-Stabilisierung:
   2 Gew.-T. Dibutyl-zinn-bis-thioglykolsäure-octylester.
   0,5 Gew.-T. Paraffinöl (Gleitmittel).
2. Übliche Ba/Cd-Stabilisierung:
   2 Gew.-T. komplexes Ba/Cd-Laurat
   (80 Teile Ba/Cd-Laurat, 12 Teile Trimethylolpropan, 8 Teile Bisphenol A),
   0,5 Gew.-T. Diphenyloctylphosphit,
   2 Gew.-T. epoxidiertes Sojaöl,
   0,3 Gew.-T. 2-(2'-Hydroxy-5'-methylphenyl)-benzotriazol (UV-Absorber),
   0,5 Gew.-T. Paraffinöl.
3. Bevorzugte Stabilisierung:
   1 Gew.-T. komplexes Ba/Cd-Laurat (wie oben)

1 Gew.-T. komplexes Ba/Cd-Benzoat (enthält 12% Trimethylolpropan u. 8% Bisphenol A)
0,5 Gew.-T. Diphenyloctylphosphit,
2 Gew.-T. epoxidiertes Sojaöl,
0,3 Gew.-T. 2-(2'-Hydroxy-5'-methylphenyl)-benzotriazol,
0,5 Gew.-T. Paraffinöl.

Die Tabelle 1 gibt die an den verschiedenen Mischungen gefundenen Werte für Transparenz und Streuung wieder. Da die Kerbschlagzähigkeit innerhalb der Fehlergrenze von der Stabilisierung unabhängig ist, wird der Wert nur bei der bevorzugten Stabilisierung angeführt. Die Transparenz bezieht sich auf einfallendes Licht.

Tabelle 1

| Beisp. | Stabilisierung 1 | | Stabilisierung 2 | | Stabilisierung 3 | | Kerbschlag-zähigkeit |
|---|---|---|---|---|---|---|---|
| | Transp. | Streuung | Transp. | Streuung | Transp. | Streuung | $a_k$ |
| | % | % | % | % | % | % | mJ/cm² |
| 1 | 86 | 20 | 81 | 53 | 84 | 22 | 5,7 |
| A | 75 | 82 | milchig trüb | | | | 13,1 |
| B | 88 | 17 | 83 | 47 | 86 | 19 | 3,3 |

Wie die Tabelle zeigt, ergibt die erfindungsgemäße Mischung, vor allem mit der bevorzugten Stabilisierung 3, fast die gleiche Transparenz wie Vergleichsversuch B (gemäß DE-PS 24 56 278); die Kerbschlagzähigkeit ist aber merklich besser. Die beste Transparenz erhält man mit der Zinn-Stabilisierung (1). Aber wie in Beispiel 2 gezeigt wird, ist die Lichtbeständigkeit der so stabilisierten Mischung wesentlich schlechter. Gegenüber den Beispielen der DE-PS 24 56 278, bei denen ein PVC mit K-Wert 70 zum Einsatz kam, haben die erfindungsgemäßen Mischungen eine wesentlich bessere Fließfähigkeit, wie das nachfolgende Beispiel 3 verdeutlicht.

## Beispiel 2

Die Lichtbeständigkeit der erfindungsgemäßen Mischung von Beispiel 1 wurde für die Stabilisierung 1 und 3 im Xenotest 450 nach DIN 53 387 und im Fadeometer bestimmt.

Tabelle 2

| Beispiel | Stabilisierung | Xenotest | Fadeometer |
|---|---|---|---|
| 1 | 3 | keine Verfärbung nach 10 000 Stunden | gelbbraun nach 3200 Stunden |
| 1 | 1 | gelbbraun nach 2000 Stunden | gelbbraun nach 800 Stunden |

Beispiel 3

Beispiel 1 wurde mit einem S-PVC mit K-Wert von 70 wiederholt. Bestimmt wurde, im Vergleich zu Beispiel 1, der Schmelzindex MFI 190/10 und 190/6 (DIN 53 735).

Tabelle 3

| Beispiel | MFI 190/10 | MFI 190/21,6 |
|---|---|---|
| 1 | 4 dl/g | 22 dl/g |
| 3 | 0,3 dl/g | 3 dl/g |

**Patentansprüche**

1. Thermoplastische Masse bstehend im wesentlichen aus

A) 95—80 Gew.-% Vinylchlorid-Polymerisat und
B) 5—20 Gew.-% chlorierter Polyäthylene, jeweils bezogen auf die thermoplastische Masse,

dadurch gekennzeichnet, daß die Komponente

A) ein Vinylchlorid-Polymerisat mit einem K-Wert von 55—65 darstellt und die Komponente
B) eine Mischung ist aus
$B_1$) 2,5—15 Gew.-Teile eines chlorierten Niederdruckpolyäthylens, das einen Chlorgehalt von 37—42 Gew.-%, einen Rückstandswert von 0—30% (gemessen durch Extrahieren mit Toluol-Aceton 1 : 1) und einen Quellwert von 10—70% (gemessen in Methylcyclohexan) hat und durch Chlorieren eines Niedruckpolyäthylens einer Dichte von 0,940—0,955 g/cm³ und eines Schmelzindex MFI 190/5 von 0,1—5 g/10 min in Suspension in Wasser oder in 10—35%iger Salzsäure in Gegenwart von 0—2 Gew.-% Kieselsäure und 0—1 Gew.-% Silikonöl, jeweils bezogen auf eingesetztes Polyäthylen, bei Temperaturen zwischen 50 und 130°C hergestellt wurde, wobei mindestens 10% Chlor zwischen 120 und 130°C eingeführt wurden, und
$B_2$) 2,5—15 Gew.-Teile eines chlorierten Niederdruckpolyäthylens, das einen Chlorgehalt von 37—42 Gew.-%, einen Rückstandswert von 50—70% und einen Quellwert unter 1% aufweist und aus einem Niederdruckpolyäthylen einer Dichte zwischen 0,955 und 0,965 g/cm³ und eines Schmelzindex MFI 190/5 von 20—65 g/10 min durch Chlorieren in Suspension in Wasser oder in 10—35%iger Salzsäure in Gegenwart von 0—2 Gew.-% Kieselsäure und 0—1 Gew.-% Silikonöl, jeweils bezogen auf das eingesetzte Polyäthylen, bei Temperaturen zwischen 50 und 120°C hergestellt wurde, wobei mindestens die letzten 10% Chlor zwischen 110 und 120°C eingeführt wurden

2. Thermoplastische Masse nach Anspruch 1, dadurch gekennzeichnet, daß sie noch an sich bekannte Zusatzstoffe enthält.

3. Thermoplastische Masse nach Anspruch 2, dadurch gekennzeichnet, daß sie als Zusatzstoff 2—8 Gew.-%, bezogen auf die thermoplastische Masse, einer Stabilisatormischung bestehend aus

0,75—2 Gew.-Teile komplexes Ba/Cd-Benzoat,
0—2 Gew.-Teile komplexe Ba/Cd-Seife einer Fettsäure mit 12—18 C-Atomen
0,3—1 Gew.-Teile Phenylalkylphosphit mit 8 bis 12 C-Atomen in der Alkylgruppe,
0,5—3 Gew.-Teile epoxydiertes Fett,
0—1 Gew.-Teile UV-Absorber und
0,5—1 Gew.-Teile Gleitmittel

enthält.

4. Thermoplastische Masse nach Anspruch 1 bis 3, dadurch gekennzeichnet, daß die Menge an Komponente A) 92—86 Gew.-% und die an Komponente B) 8—14 Gew.-% beträgt.

5. Thermoplastische Masse nach Anspruch 1 bis 4, dadurch gekennzeichnet, daß die Menge an den Komponenten $B_1$) und $B_2$) jeweils 4—10 Gew.-Teile beträgt.

6. Thermoplastische Masse nach Anspruch 1—5, dadurch gekennzeichnet, daß die Herstellung der Komponenten $B_1$) und $B_2$) in 10 bis 35%iger Salzsäure erfolgt.

**Claims**

1. Thermoplastic composition consisting essentially of

A) 95—80% by weight of vinyl chloride polymer and
B) 5—20% by weight of chlorinated polyethylenes, each time calculated on the thermoplastic composition,

wherein component

A) is a vinyl chloride polymer with a K value of from 55—65, and component
B) is a mixture of
$B_1$) 2.5—15 parts by weight of a chlorinated low pressure polyethylene, having a chlorine content of from 37—42% by weight, a residue value of from 0—30% (measured by extraction with toluene/acetone 1 : 1) and a swelling value of from 10—70% (measured in methyl cyclohexane) and which has been prepared by chlorination of a low pressure polyethylene of a density of from 0.940—0.955 g/cm$^3$ and a melt flow index MFI 190/5 of from 0.1—5 g/10 min in suspension in water or in 10—35% hydrochloric acid in the presence of 0—2% by weight of silicic acid and 0—1% by weight of silicone oil, relative, each time, to the polyethylene used, at temperatures between 50 and 130°C, with at least 10% of chlorine being introduced at temperatures between 120 and 130°C and
$B_2$) 2.5—15 parts by weight of a chlorinated low pressure polyethylene with a chlorine content of from 37—42% by weight, a residue value of 50—70% and a swelling value below 1% and which has been prepared from a low pressure polyethylene with a density between 0.955 and 0.965 g/cm$^3$ and a melt flow index MFI 190/5 of from 20—65 g/10 min by chlorination in suspension in water or in 10—35% hydrochloric acid in the presence of 0—2% by weight of silicic acid and 0—1% by weight of silicone oil, each time calculated on the polyethylene used, at temperatures between 50 and 120°C, while introducing at least the last 10% of chlorine at a temperatur of from 110 to 120°C.

2. Thermoplastic composition according to Claim 1, which additionally contains additives known in themselves.

3. Thermoplastic composition according to Claim 2, which contains as additives 2—8% by weight relative to the thermoplastic composition of a mixture of stabilizers, consisting of

0.75—2 parts by weight of complex Ba/Cd benzoate,
0—2 parts by weight of complex Ba/Cd-soap of a fatty acid with 12—18 carbon atoms
0.3—1 part by weight of phenylalkyl phosphite with 8 to 12 carbon atoms in the alkyl group,
0.5—3 parts by weight of epoxidized fat
0—1 part by weight of UV-absorber and
0.5—1 part by weight of lubricant.

4. Thermoplastic composition according to Claim 1 to 3, wherein the amount of component A) is 92—86% by weight and of component B) 8—14% by weight.

5. Thermoplastic composition according to Claims 1 to 4, wherein the amount of components $B_1$) and $B_2$) is from 4—10 parts by weight each.

6. Thermoplastic composition according to Claims 1—5, wherein components $B_1$) and $B_2$) are prepared in 10 to 35% hydrochlorid acid.

**Revendications**

1. Matière thermoplastique comprenant essentiellement (A) 95—80% en poids d'un polymérisat de chlorure de vinyle et (B) 5—20% en poids de polyéthylènes chlorés, les pourcentages étant rapportés au poids de la matière thermoplastique, caractérisée en ce que le composant (A) est un polymérisat de chlorure de vinyle ayant une valeur K de 55—65, et que le composant (B) est un mélange ($B_1$) de 2,5—15 parties en poids d'un polyéthylène basse pression chloré, qui possède une teneur en chlore de 37—42% en poids, un taux de résidu de 0—30% (mesuré par extraction par un mélange 1 : 1 de toluène et d'acétone) et un taux de rétention de 10—70% (mesuré dans le méthylcyclohexane), et qui aété préparé à des températures comprises entre 50 et 130°C par la chloration d'un polyéthylène basse pression ayant une masse volumique de 0,940—0,955 g/cm$^3$ et un indice de fusion MFI 190/5 de 0,1—5 g/10 min, en suspension dans l'eau ou dans de l'acide chlorhydrique à 10—35%, en présence de 0—2% en poids d'acide silicique et de 0—1% en poids d'huile de silicone, les pourcentages étant rapportés au poids du polyéthylène utilisé, au moins 10% du chlore étant introduits entre 120 et 130°C; et ($B_2$) de 2,5—15 parties en poids d'un polyéthylène basse pression chloré, qui présente une teneur en

chlore de 37—42% en poids, un taux de résidu de 50—70% et un taux de rétention inférieur à 1%, et qui a été préparé à des températures comprises entre 50 et 120°C à partir d'un polyéthylène basse pression ayant une masse volumique comprise entre 0,955 et 0,965 g/cm³ et un indice de fusion MFI 190/5 de 20 à 65 g/10 min, par chloration en suspension dans l'eau ou dans de l'acide chlorhydrique à 10—35%, en présence de 0—2% en poids d'acide silicique et de 0—1% en poids d'huile de silicone, les pourcentages étant rapportés au poids de polyéthylène utilisé, au moins les dix derniers pourcents de chlore étant introduits entre 110 et 120°C.

2. Matière thermoplastique selon la revendication 1, caractérisée en ce qu'elle contient en outre des additifs connus.

3. Matière thermoplastique selon la revendication 2, caractérisée en ce qu'elle contient en tant qu'additif 2—8% en poids, sur la base du poids de la matière thermoplastique, d'un mélange stabilisant comprenant 0,75—2 parties en poids de benzoate complexe de Ba/Cd, 0—2 parties en poids d'un savon complexe de Ba/Cd d'un acide gras à 12—18 atomes de carbone, 0,3—1 partie en poids de phosphite de phénylalkyle ayant 8—12 atomes de carbone dans le groupe alkyle, 0,5—3 parties en poids d'une graisse époxydée, 0—1 partie en poids d'un absorbant UV et 0,5—1 partie en poids d'un lubrifiant.

4. Matière thermoplastique selon l'une quelconque des revendications 1 à 3, caractérisée en ce que le pourcentage du composant (A) est de 92—86% en poids et celui du composant (B) de 8—14% en poids.

5. Matière thermoplastique selon l'une quelconque des revendications 1 à 4, caractérisée en ce que le pourcentage de composant ($B_1$) et celui du composant ($B_2$) est de 4—10 parties en poids.

6. Matière thermoplastique selon l'une quelconque des revendications 1 à 5, caractérisée en ce que la préparation des composants ($B_1$) et ($B_2$) s'effectue dans de l'acide chlorhydrique à 10 à 35%.